# EUROPEAN PATENT APPLICATION

(11) **EP 4 120 135 A1**
(43) Date of publication of application: **18.01.2023**
(21) Application number: 20928824.0
(22) Date of filing: 30.10.2020
(51) Int. Cl.: G06N 3/04, G06N 3/08

(54) **ATTACHMENT FORCE ADJUSTMENT METHOD AND APPARATUS, DEVICE, AND STORAGE MEDIUM**

(30) Priority: 02.04.2020 CN 202010257085
(71) Applicant: Shenzhen Skyworth-Rgb Electronic Co., Ltd, Nanshan District Shenzhen, Guangdong 518000 (CN)
(72) Inventor: SONG, Xiaobo, Shenzhen, Guangdong 518000 (CN)
(74) Representative: Rossi, Ugo
(86) International application number: PCT/CN2020/125555
(87) International publication number: WO 2021/196594

(57) **Abstract**

A method and an apparatus for adjusting an attachment force, a device, and a storage medium, relating to the technical field of smart devices. The method includes: collection data of a first sensor in a smart display terminal is acquired(S101); according to the collection data of the first sensor, through a behavior prediction model which is pre-trained, a behavior state of an attachment contact on the smart display terminal is determined(S102); and according to the behavior state of the attachment contact, a magnetic force of an electromagnet corresponding to the attachment contact in the smart display terminal is adjusted, so as to adjust an attachment force of the attachment contact (S103). Compared with the technical solutions known to the inventor, the present disclosure avoids the problem in the technical solutions known to the inventor that a behavior state of a contact cannot be predicted, thereby being too laborious for a user to take down an attachment contact, or an insufficient attachment force of the attachment contact during static attachment.

## Description

### Cross-Reference to Related Disclosure

The present disclosure claims priority to Chinese Patent Disclosure No. 2020102570857, filed to the Chinese Patent Office on April 02, 2020 and entitled "Method and Apparatus for Adjusting Attachment Force, Device, and Storage Medium ", which is incorporated herein by reference in its entirety.

### Technical Field

The present disclosure relates to the technical field of smart devices, and in particular, to a method for adjusting an attachment force and an apparatus, a device, and a storage medium.

### Background

With the development of technology, smart display terminals are applied more and more widely in people's lives, and can generally be applied in fields such as enterprise video conferences, television station directing and multimedia teaching, thereby providing great convenience for people's lives.

The smart display terminals are very popular among users due to being convenient to use, and having a beautiful appearance design and a reasonable scientific structure, greatly improving the service capability of merchants, and making customers have a more convenient and quick service experience.

However, the contact solutions of current smart display terminals generally have a magnetic attachment function, and in some scenarios, the attachment strength of the magnetic attachment function cannot be controlled, causing problems such as consumption of great effort to take down an attachment contact when an attachment force of the attachment contact during combination is too large, or an insufficient attachment force during static attachment.

### Summary

Embodiments of the present disclosure adopt the following technical solutions:
according to a first aspect, embodiments of the present disclosure provide a method for adjusting an attachment force, the method includes:
acquiring collection data of a first sensor in a smart display terminal;
determining, according to the collection data of the first sensor, a behavior state of an attachment contact on the smart display terminal by a behavior prediction model which is pre-trained; and
adjusting, according to the behavior state of the attachment contact, a magnetic force of an electromagnet corresponding to the attachment contact in the smart display terminal, so as to adjust an attachment force of the attachment contact.

Optionally, before acquiring the collection data of the first sensor in the smart display terminal, the method further includes: detecting whether the smart display terminal is moved;
acquiring the collection data of the first sensor in the smart display terminal includes: acquiring the collection data of the first sensor in a case that the smart display terminal is moved.

Optionally, the first sensor is a sensor other than a vibration sensor in the smart display terminal; and detecting whether the smart display terminal is moved includes:
acquiring collection data of the vibration sensor; and
detecting, according to the collection data of the vibration sensor, whether the smart display terminal is moved.

Optionally, a step of detecting whether the smart display terminal is moved includes:
determining, in a case that the vibration sensor does not acquire vibration information, that the smart display terminal is not moved; and
determining, in a case that the vibration sensor acquires vibration information, that the smart display terminal is moved.

Optionally, before determining, according to the collection data of the first sensor, the behavior state of the attachment contact on the smart display terminal by the behavior prediction model which is pre-trained, the method further includes:
acquiring sample data corresponding to at least one behavior state, and the sample data of each of the at least one behavior state is data collected by the first sensor when the attachment contact is in each of the at least one behavior state; and
performing model training according to a plurality of the sample data, to obtain the behavior prediction model.

Optionally, acquiring the sample data corresponding to the at least one behavior state includes:
acquiring a plurality of data collected by the first sensor when the smart display terminal operates the attachment contact within a preset historical time period;
determining, from the a plurality of data, data when the attachment contact is in each behavior state as collection data corresponding to each behavior state; and
marking the behavior state of the collection data corresponding to each behavior state, to obtain sample data corresponding to each behavior state.

Optionally, adjusting, according to the behavior state of the attachment contact, a magnetic force of the electromagnet corresponding to the attachment contact in the smart display terminal includes:
selecting, according to the behavior state of the attachment contact, to perform decrease regulation or increase regulation on the magnetic force of the electromagnet corresponding to the attachment contact.

Optionally, the behavior state of the attachment contact includes: a combined behavior state; and adjusting, according to the behavior state of the attachment contact, the magnetic force of the electromagnet corresponding to the attachment contact in the smart display terminal includes:
performing increase regulation on the magnetic force of the electromagnet corresponding to the attachment contact in a case that the behavior state of the attachment contact is the combined behavior state.

Optionally, the behavior state of the attachment contact includes: a separated behavior state; and adjusting, according to the behavior state of the attachment contact, the magnetic force of the electromagnet corresponding to the attachment contact in the smart display terminal includes:
performing decrease regulation on the magnetic force of the electromagnet corresponding to the attachment contact in a case that the behavior state of the attachment contact is the separated behavior state.

Optionally, a surface of the smart display terminal includes a plurality of electromagnet regions, and each of the electromagnet regions is provided with a plurality of attachment contacts; and adjusting, according to the behavior state of the attachment contact, the magnetic force of the electromagnet corresponding to the attachment contact in the smart display terminal includes:
adjusting, according to the behavior state of the attachment contact, a magnetic force corresponding to an electromagnet region where the attachment contact is located.

Optionally, the first sensor includes at least one of the following sensors: a direction sensor, a gravity sensor, an acceleration sensor, a gyroscope, a pressure sensor, and a touch sensor.

According to a second aspect, embodiments of the present disclosure provide an apparatus for adjusting an attachment force. The apparatus includes: an acquisition component, a determination component, and an adjustment component, and the acquisition component is configured to acquire collection data of a first sensor in a smart display terminal;
the determination component is configured to determine, according to the collection data of the first sensor, a behavior state of an attachment contact on the smart display terminal by a behavior prediction model which is pre-trained; and
the adjustment component is configured to adjust, according to the behavior state of the attachment contact, a magnetic force of an electromagnet corresponding to the attachment contact in the smart display terminal, so as to adjust an attachment force of the attachment contact.

Optionally, the apparatus further includes: a detection component, configured to detect whether the smart display terminal is moved;
the acquisition component is further configured to acquire the collection data of the first sensor in a case that the smart display terminal is moved.

Optionally, the acquisition component is further configured to acquire collection data of a vibration sensor; and
the detection component is further configured to detect, according to the collection data of the vibration sensor, whether the smart display terminal is moved.

Optionally, the apparatus further includes: a training component, and the acquisition component is further configured to acquire sample data corresponding to at least one behavior state, and the sample data of each of the at least one behavior state is data collected by the first sensor when the attachment contact is in each of the at least one behavior state; and
the training component is configured to perform model training according to a plurality of the sample data, to obtain the behavior prediction model.

Optionally, the acquisition component is further configured to acquire a plurality of data collected by the first sensor when the smart display terminal operates the attachment contacts within a preset historical time period;
the determination component is further configured to determine, from a plurality of data, data when the attachment contact is in each behavior state as collection data corresponding to each behavior state; and
the determination component is further configured to mark the behavior state of the collection data corresponding to each behavior state, to obtain sample data corresponding to each behavior state.

Optionally, the behavior state of the attachment contact includes: a combined behavior state; and the apparatus further includes: a regulation component, configured to perform the increase regulation on the magnetic force of the electromagnet corresponding to the attachment contact in a case that the behavior state of the attachment contact is the combined behavior state.

Optionally, the behavior state of the attachment contact includes: a separated behavior state; and the regulation component is further configured to perform the decrease regulation on the magnetic force of the electromagnet corresponding to the attachment contact in a case that the behavior state of the attachment contact is the separated behavior state.

Optionally, a surface of the smart display terminal includes a plurality of electromagnet regions, and each of the electromagnet regions is provided with a plurality of attachment contacts; and the adjustment component is further configured to adjust, according to the behavior state of the attachment contact, a magnetic force corresponding to an electromagnet region where the attachment contact is located.

According to a third aspect, embodiments of the present disclosure provide a smart display device, includes: a processor, a storage medium and a bus, the storage medium storing machine-readable instructions executable by the processor; and when an attachment force adjustment device is in operation, the processor and the storage medium communicate with each other via the bus, and the processor executes the machine-readable instructions so as to execute the steps of any one method according to the first aspect.

According to a fourth aspect, embodiments of the present disclosure provide a storage medium, and the storage medium stores a computer program which, when being run by a processor, executes the steps of any one method according to the first aspect.

Beneficial effects of embodiments of the present disclosure are: by the method for adjusting the attachment force, the behavior state of the attachment contact can be predicted according to the data collected by the first sensor and the behavior prediction model which is pre-trained, and the magnetic force of the electromagnet corresponding to the attachment contact can be adjusted according to the behavior state of the attachment contact, thereby adjusting the attachment force of the attachment contact, so as to adjust an attachment force of the attachment contact, so that the attachment force of the attachment contact is dynamically and flexibly controlled; that is, the attachment force of the attachment contact can be dynamically adjusted according to the behavior state thereof, so that an attachment take-down operation of a smart display terminal is more labor-saving, and an attachment force during static attachment can also be ensured, thereby enhancing user experience.

### Brief Description of the Drawings

In order to illustrate the technical solutions of the embodiments of the present disclosure more clearly, hereinafter, accompanying drawings requiring to be used in the embodiments will be briefly introduced. It should be understood that the following accompanying drawings only illustrate certain embodiments of the present disclosure, and therefore shall not be considered as limiting the scope. For a person of ordinary skill in the art, other related accompanying drawings may also be obtained according to these accompany drawings without any inventive effort.
Fig. 1 is a schematic flowchart of a method for adjusting an attachment force provided in embodiments of the present disclosure;
Fig. 2 is a schematic flowchart of a method for adjusting an attachment force provided in embodiments of the present disclosure;
Fig. 3 is a schematic flowchart of a method for adjusting an attachment force provided in embodiments of the present disclosure;
Fig. 4 is a schematic flowchart of a method for adjusting an attachment force provided in embodiments of the present disclosure;
Fig. 5 is a schematic structural diagram of an apparatus for adjusting an attachment force provided in embodiments of the present disclosure;
Fig. 6 is a schematic structural diagram of an apparatus for adjusting an attachment force provided in embodiments of the present disclosure;
Fig. 7 is a schematic structural diagram of an apparatus for adjusting an attachment force provided in embodiments of the present disclosure;
Fig. 8 is a schematic structural diagram of an apparatus for adjusting an attachment force provided in embodiments of the present disclosure; and
Fig. 9 is a schematic structural diagram of a smart display terminal provided in embodiments of the present disclosure.

### Detailed Description of the Embodiments

In order to make objects, technical solutions and advantages of embodiments of the present disclosure clearer, hereinafter, the technical solutions in the embodiments of the present disclosure will be described clearly and completely with reference to the accompanying drawings of the embodiments of the present disclosure. Obviously, the embodiments as described are only some of the embodiments of the present disclosure, and are not all of the embodiments.

Each method for adjusting an attachment force provided below can be achieved by a processor of a smart display terminal, and the specific product form of the smart display terminal can be a smart screen, a smart display screen, a smart television, etc.

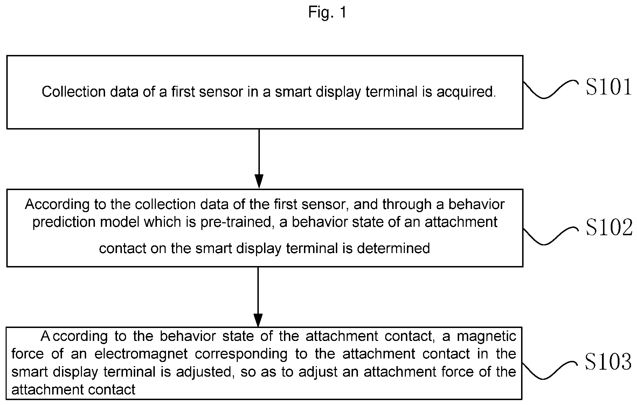

Hereinafter, the method for adjusting an attachment force provided in embodiments of the present disclosure is explained and described in combination with multiple specific application examples. Fig. 1 is a schematic flowchart of a method for adjusting an attachment force provided in embodiments of the present disclosure. As shown in Fig. 1, the method includes:
S101: collection data of a first sensor in a smart display terminal is acquired.

The first sensor is installed inside the smart display terminal, and is configured to collect relevant data of the smart display terminal. In some embodiments, the first sensor includes at least one type of sensor in the smart display terminal.

Optionally, in some embodiments of the present disclosure, the collection data of the first sensor is acquired in real time, in some embodiments of the present disclosure, the collection data of the first sensor is acquired according to a preset time interval, in some other embodiments of the present disclosure, the collection data of the first sensor is acquired when a preset trigger condition is satisfied. The specific manner for acquiring the collection data of the first sensor can be designed according to actual requirements, and is not limited to the methods provided in the described embodiment.

S102: according to the collection data of the first sensor, and through a behavior prediction model which is pre-trained, a behavior state of an attachment contact on the smart display terminal is determined.

Optionally, the behavior prediction model is pre-trained, and can determine the current behavior state of a user according to the data collected by the first sensor, that is, can determine the behavior state of the attachment contact on which the user is currently operating. An input of the behavior prediction model is the collection data of the first sensor, and an output thereof is the behavior state of the attachment contact. In possible implementation examples, the collection data of the first sensor is inputted into the behavior prediction model, and the behavior prediction model is used to perform prediction, so as to obtain the behavior state of the attachment contact outputted by the behavior prediction model.

S103: according to the behavior state of the attachment contact, a magnetic force of an electromagnet corresponding to the attachment contact in the smart display terminal is adjusted, so as to adjust an attachment force of the attachment contact.

The attachment force of the attachment contact can be adjusted to be greater or less according to the behavior state of the attachment contact, so that different behavior states correspond to different attachment forces, and the attachment force can be adaptively adjusted according to the current behavior state. For example, according to the type of the behavior state of the attachment contact, decrease regulation or increase regulation is selected to perform on the magnetic force of the electromagnet corresponding to the attachment contact. In some embodiments, a control electrical signal of the electromagnet corresponding to the attachment contact in the smart display terminal can be regulated according to the behavior state of the attachment contact, so as to adjust the magnetic force of the electromagnet. In some embodiments, the control electrical signal is a control current or a control voltage.

By using the method for adjusting the attachment force provided in some embodiments of the present disclosure, the behavior state of the attachment contact can be predicted according to the data collected by the first sensor and the behavior prediction model which is pre-trained, and a magnetic force of the electromagnet corresponding to the attachment contact can be adjusted according to the behavior state of the attachment contact, thereby adjusting the attachment force of the attachment contact, so as to adjust the attachment force of the attachment contact, so that the attachment force of the attachment contact is dynamically and flexibly controlled; that is, the attachment force of the attachment contact can be dynamically adjusted according to the behavior state thereof, so that an attachment take-down operation of the smart display terminal is more labor-saving, and an attachment force during static attachment can also be ensured, thereby enhancing user experience.

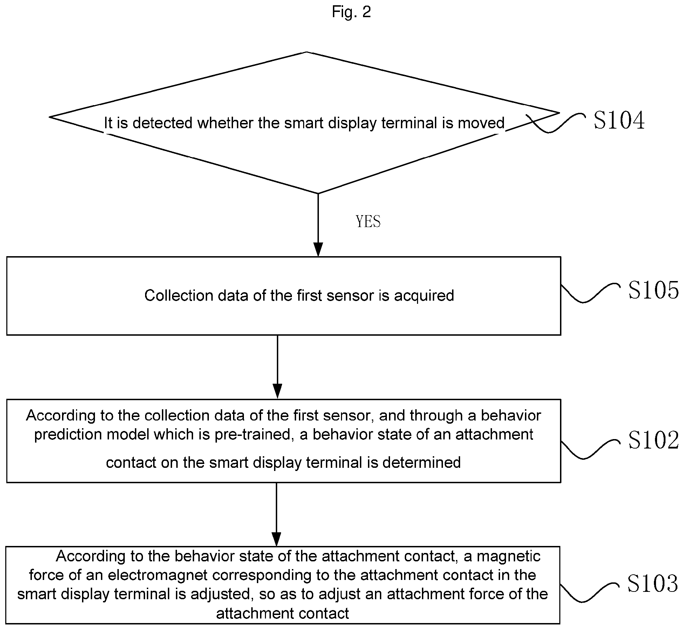

Optionally, on the basis of the described embodiments, embodiments of the present disclosure may further provide a method for adjusting an attachment force, which is described hereinbelow in combination with the accompanying drawings. Fig. 2 is a schematic flowchart of a method for adjusting an attachment force provided in some other embodiments of the present disclosure. As shown in Fig. 2, before S101, the method further includes:
S104: it is detected whether the smart display terminal is moved.

Optionally, in some embodiments of the present disclosure, whether the smart display terminal is moved can be detected by means of a vibration sensor, that is, collection data of the vibration sensor is acquired, and then whether the smart display terminal is moved is detected according to the collection data of the vibration sensor.

The vibration sensor is a sensor other than the first sensor in the smart display terminal, and is configured to pre-estimate the current state of the smart display terminal according to currently collected data, that is, pre-estimate whether the smart display terminal is used by a user.

Correspondingly, S101 includes: in a case that the smart display terminal is moved, executing S105: collection data of the first sensor is acquired.

Optionally, illustration is made by still taking as an example the vibration sensor detecting whether the smart display terminal is moved: in a case that the vibration sensor does not acquire vibration information, it indicates that the smart display terminal is currently in a static state, and the collection data of the first sensor does not need to be acquired at this time; and in a case that the vibration sensor acquires vibration information, it indicates that the smart display terminal may be currently in a process of being used by a user, and the collection data of the first sensor is acquired in real time at this time; and whether the user performs a relevant operation on the attachment contact is further determined according to the collection data of the first sensor, until the vibration sensor does not acquire the vibration information, it indicates that the user's operation on the smart display terminal has been completed.

Such a configuration manner makes it unnecessary to acquire the collection data of the first sensor when the smart display terminal is in the static state, and makes it unnecessary to acquire the collection data of the first sensor in real time, thereby saving energy consumption of the smart display terminal.

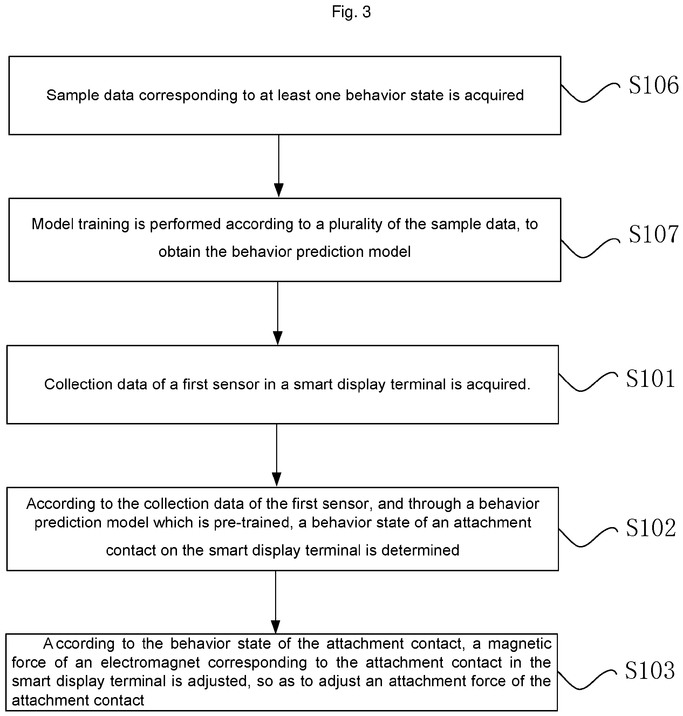

Optionally, on the basis of the described embodiments, embodiments of the present disclosure may further provide a method for adjusting an attachment force, which is described hereinbelow in combination with the accompanying drawings. Fig. 3 is a schematic flowchart of a method for adjusting an attachment force provided in embodiments of the present disclosure. As shown in Fig. 3, before S101, the method further includes:
S106: sample data corresponding to at least one behavior state is acquired.

The sample data of each of the at least one behavior state is data collected by the first sensor when the attachment contact is in each of the at least one behavior state.

In some possible embodiments, a method for acquiring the sample data includes: a plurality of data collected by the first sensor is pre-acquired when the smart display terminal operates contacts within a preset historical time period; from the a plurality of data, data when the attachment contact is in each behavior state is determined as collection data corresponding to each behavior state; and the behavior state of collection data corresponding to each behavior state is marked, to obtain sample data corresponding to each behavior state.

S107: model training is performed according to a plurality of the sample data, to obtain the behavior prediction model.

Optionally, in some embodiments of the present disclosure, a network architecture of a preset model is: a deep neural network (DNN), convolutional neural networks (CNNs), a recurrent neural network (RNN), a long short-term memory (LSTM) network, and a gated recurrent unit (GRU), etc. The specific network architecture of the preset model can be designed according to user requirements, and is not limited to the network architectures provided in the described embodiments.

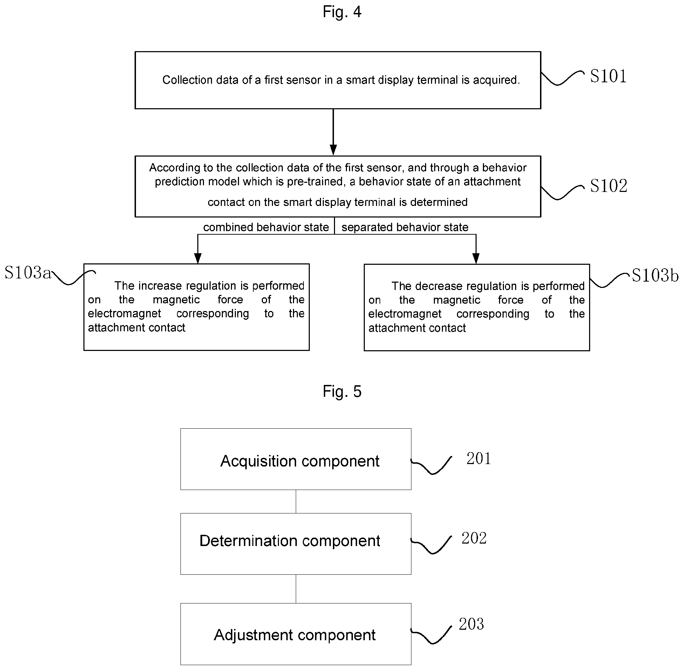

Optionally, on the basis of the described embodiments, embodiments of the present disclosure may further provide a method for adjusting an attachment force, which is described hereinbelow in combination with the accompanying drawings. Fig. 4 is a schematic flowchart of a method for adjusting an attachment force according to embodiments of the present disclosure. The behavior state of the attachment contact includes: a combined behavior state or a separated behavior state. As shown in Fig. 4, S103 includes:
in a case that the behavior state of the attachment contact is the combined behavior state, executing S103a: the increase regulation is performed on the magnetic force of the electromagnet corresponding to the attachment contact.

When the behavior state of the attachment contact is the combined behavior state, increasing the magnetic force of the electromagnet corresponding to the attachment contact can enhance a steady-state magnetic attachment force, thereby avoiding the risk of falling off.

In a case that the behavior state of the attachment contact is the separated behavior state, executing step S103b: the decrease regulation is performed on the magnetic force of the electromagnet corresponding to the attachment contact.

When the behavior state of the attachment contact is the separated behavior state, the magnetic force of the electromagnet corresponding to the attachment contact is decreased, so that a user can take down the attachment contact only with a relatively small force when taking down the attachment contact, thereby improving user experience.

Optionally, in some embodiments of the present disclosure, a surface of the smart display terminal includes a plurality of electromagnet regions, and each of the electromagnet regions is provided with a plurality of attachment contacts. S103 includes: according to the behavior state of the attachment contact, a magnetic force corresponding to the electromagnet region where the attachment contact is located is adjusted.

After the collection data of the first sensor is acquired, the electromagnet region to which the current attachment contact belongs can be determined first, then the behavior state of the attachment contact is determined, and then the magnetic force corresponding to the electromagnet region where the attachment contact is located is adjusted, and magnetic forces of other electromagnet regions do not need to be adjusted.

With such a configuration manner, each time a magnetic force is adjusted, only the magnetic force corresponding to the electromagnet region where the attachment contact currently operated by the user is located is adjusted, and the magnetic force corresponding to the whole electromagnet region does not need to be adjusted, thereby ensuring that when the user operates some attachment contacts, other attachment contacts can be normally attached to the smart display terminal.

For example, a back plate of a current smart display terminal includes four electromagnet regions, which are respectively an upper left block, a lower left block, an upper right block and a lower right block. After acquiring collection data of the first sensor, a controller determines that where a user currently operates is an attachment contact located on the electromagnet region of the upper left block, and when the current behavior state is a separated behavior state, the controller controls the attachment force of the electromagnet region of the upper left block to be decreased, while the attachment forces of other electromagnet regions are unchanged.

Optionally, in some embodiments of the present disclosure, the electromagnet is replaced with an aluminum magnet, and the specific selection of the magnet can be set according to user requirements, and is not limited to those provided in the described embodiments.

Optionally, in some embodiments of the present disclosure, the first sensor includes at least one of the following sensors: a direction sensor, a gravity sensor, an acceleration sensor, a gyroscope, a pressure sensor, and a touch sensor.

By using the method for adjusting an attachment force provided in some embodiments of the present disclosure, whether a user is currently using a smart display terminal can be determined by means of collection data of the vibration sensor; in a case that the determination result is that the user is using the smart display terminal, the data collected by the first sensor is acquired at this time, and the behavior state of the attachment contact is determined according to the behavior prediction model, and according to the current behavior state of the attachment contact, the magnetic force of the electromagnet where the attachment contact is located is adjusted, so as to adjust the attachment force of the attachment contact, and magnetic forces of electromagnets in other regions are unchanged, so that the attachment force can be dynamically adjusted according to the current behavior state of the user, thereby improving user experience.

Hereinafter, an apparatus for adjusting an attachment force provided in some embodiments of the present disclosure is explained and illustrated in conjunction with the accompanying drawings. The attachment force adjustment apparatus can execute any one of the method for adjusting the attachment forces as shown in Fig. 1 to Fig. 4. For specific implementations and beneficial effects thereof, reference is made to the description above, and details are not repeated hereinbelow. Fig. 5 is a schematic structural diagram of an apparatus for adjusting an attachment force provided in embodiments of the present disclosure. As shown in Fig. 5, the apparatus includes: an acquisition component 201, a determination component 202 and an adjustment component 203, and the acquisition component 201 is configured to acquire collection data of a first sensor in a smart display terminal.

The determination component 202 is configured to determine, according to the collection data of the first sensor, a behavior state of an attachment contact on the smart display terminal by a behavior prediction model which is pre-trained.

The adjustment component 203 is configured to adjust, according to the behavior state of the attachment contact, a magnetic force of an electromagnet corresponding to the attachment contact in the smart display terminal, so as to adjust an attachment force of the attachment contact.

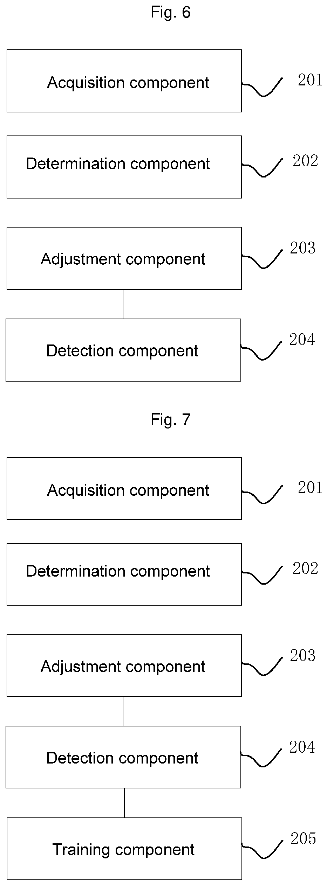

Fig. 6 is a schematic structural diagram of an apparatus for adjusting an attachment force provided in embodiments of the present disclosure. As shown in Fig. 6, the apparatus further includes: a detection component 204, configured to detect whether the smart display terminal is moved.

The acquisition component 201 is further configured to acquire the collection data of the first sensor in a case that the smart display terminal is moved.

Optionally, the acquisition component 201 is further configured to acquire collection data of a vibration sensor.

The detection component 204 is further configured to detect, according to the collection data of the vibration sensor, whether the smart display terminal is moved.

Fig. 7 is a schematic structural diagram of another apparatus for adjusting an attachment force provided in embodiments of the present disclosure. As shown in Fig. 7, the apparatus further includes: a training component 205, and the acquisition component 201 is further configured to acquire sample data corresponding to at least one behavior state, and the sample data of each of the at least one behavior state is data collected by the first sensor when the attachment contact is in each of the at least one behavior state.

The training component 205 is configured to perform model training according to a plurality of the sample data, to obtain the behavior prediction model.

Optionally, the acquisition component 201 is further configured to acquire a plurality of data collected by the first sensor when the smart display terminal operates the attachment contacts within a preset historical time period;
the determination component 202 is further configured to determine, from a plurality of data, data when the attachment contact is in each behavior state as collection data corresponding to each behavior state; and
the determination component 202 is further configured to mark the behavior state of the collection data corresponding to each behavior state, to obtain sample data corresponding to each behavior state.

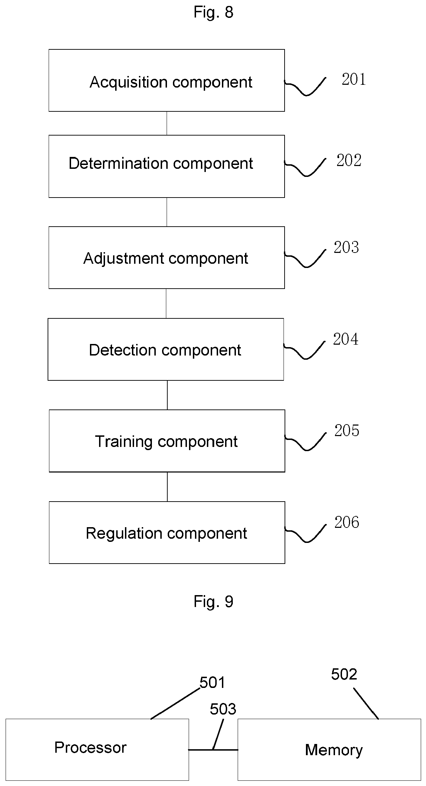

Fig. 8 is a schematic structural diagram of another attachment force adjustment apparatus provided in embodiments of the present disclosure. The behavior state of the attachment contact includes: a combined behavior state. As shown in Fig. 8, the apparatus further includes: a regulation component 206, configured to perform the increase regulation on the magnetic force of the electromagnet corresponding to the attachment contact in a case that the behavior state of the attachment contact is the combined behavior state.

Optionally, the behavior state of the attachment contact includes: a separated behavior state.

The regulation component 206 is further configured to perform the decrease regulation on the magnetic force of the electromagnet corresponding to the attachment contact in a case that the behavior state of the attachment contact is the separated behavior state.

Optionally, a surface of the smart display terminal includes a plurality of electromagnet regions, and each of the electromagnet regions is provided with a plurality of attachment contacts. The regulation component 206 is further configured to adjust, according to the behavior state of the attachment contact, a magnetic force corresponding to an electromagnet region where the attachment contact is located.

The described configurations of the apparatus are used to execute the methods provided in the described embodiments, and implementation principles and technical effects thereof are similar, and will not be repeated herein again.

The described components may be one or more integrated circuits configured to implement the described methods, for example, one or more application specific integrated circuits (ASICs for short), or one or more microprocessors (digital signal processors, DSPs for short), or one or more field programmable gate arrays (FPGAs for short). For another example, when a certain component is implemented in a form of scheduling program codes by using a processing element, the processing element may be a general-purpose processor, for example, a central processing unit (CPU for short) or other processors that can invoke the program codes. For another example, these components may be integrated together and implemented in a system-on-a-chip (SOC for short) form.

Fig. 9 is a schematic structural diagram of a smart display terminal provided in embodiments of the present disclosure. The smart display terminal includes: a processor 501, a storage medium 502 and a bus 503.

The processor 501 is configured to store a program, and the processor 501 invokes the program stored in the storage medium 502 to execute the method corresponding to Fig. 1 to Fig. 4. Specific implementations and technical effects are similar, and are not repeated herein again.

Optionally, some embodiments of the present disclosure further provide a program product, for example, a storage medium; the storage medium stores a computer program, comprising a program which, when being run by a processor, executes the embodiments corresponding to the described methods.

In the several embodiments provided in some embodiments of the present disclosure, it should be understood that the disclosed apparatuses and methods may be implemented in other manners. For example, the apparatus embodiments as described above are merely exemplary. For example, the division of units is only logical functional division, and there can be other division methods in actual implementation, for example, multiple units or assemblies can be combined or integrated into another system, or some features can be ignored or not executed. In addition, the coupling or direct coupling or communication connection shown or discussed may be indirect coupling or communication connection through some interfaces, apparatuses or units, and may be electrical, mechanical or other forms.

The units described as separate components may or may not be physically separated, and the components displayed as units may or may not be physical units, that is, may be located in one place, or may be distributed to multiple network units. Some or all units can be selected according to actual needs to achieve the purpose of the solutions of the embodiments.

In addition, functional units in the embodiments of the present disclosure may be integrated into one processing unit, or the units may exist alone physically, or two or more units are integrated into one unit. The described integrated unit may be both implemented in the form of hardware, and may also be implemented in the form of hardware and software functional units.

The integrated unit implemented in the form of software functional units may be stored in a computer-readable storage medium; The software functional unit is stored in a storage medium, and includes several instructions for instructing a computer device (which may be a personal computer, a server, or a network device) or a processor to execute some of the steps of the methods described in the embodiments of the present disclosure. The storage medium above includes: any medium that can store program codes, such as a USB flash disk, a removable hard disk, a read-only memory (ROM for short), a random access memory (RAM for short), a magnetic disk, or an optical disk.

### Industrial Applicability

The method and apparatus for adjusting an attachment force, the device and the storage medium provided in some embodiments of the present disclosure dynamically adjust the magnitude of a magnetic force of an attachment contact according to a behavior state of the attachment contact, so that an attachment take-down operation of a smart display terminal is more labor-saving, and an attachment force during static attachment can also be ensured, thereby enhancing user experience.

## Claims

1. A method for adjusting an attachment force, comprising:
acquiring collection data of a first sensor in a smart display terminal;
determining, according to the collection data of the first sensor, a behavior state of an attachment contact on the smart display terminal by a behavior prediction model which is pre-trained; and
adjusting, according to the behavior state of the attachment contact, a magnetic force of an electromagnet corresponding to the attachment contact in the smart display terminal, so as to adjust an attachment force of the attachment contact.

2. The method according to claim 1, wherein before acquiring the collection data of the first sensor in the smart display terminal, the method further comprises: detecting whether the smart display terminal is moved;
acquiring the collection data of the first sensor in the smart display terminal comprises:
acquiring the collection data of the first sensor in a case that the smart display terminal is moved.

3. The method according to claim 2, wherein the first sensor is a sensor other than a vibration sensor in the smart display terminal; and detecting whether the smart display terminal is moved comprises:
acquiring collection data of the vibration sensor; and
detecting, according to the collection data of the vibration sensor, whether the smart display terminal is moved.

4. The method according to claim 2, wherein a step of detecting whether the smart display terminal is moved comprises:
determining, in a case that the vibration sensor does not acquire vibration information, that the smart display terminal is not moved; and
determining, in a case that the vibration sensor acquires vibration information, that the smart display terminal is moved.

5. The method according to claim 1, wherein before determining, according to the collection data of the first sensor, the behavior state of the attachment contact on the smart display terminal by the behavior prediction model which is pre-trained, the method further comprises:
acquiring sample data corresponding to at least one behavior state, wherein the sample data of each of the at least one behavior state is data collected by the first sensor when the attachment contact is in each of the at least one behavior state; and
performing model training according to a plurality of the sample data, to obtain the behavior prediction model.

6. The method according to claim 5, wherein acquiring the sample data corresponding to the at least one behavior state comprises:
acquiring a plurality of data collected by the first sensor when the smart display terminal operates the attachment contact within a preset historical time period;
determining, from the plurality of data, data when the attachment contact is in each behavior state as collection data corresponding to each behavior state; and
marking the behavior state of the collection data corresponding to each behavior state, to obtain sample data corresponding to each behavior state.

7. The method according to any one of claims 1-6, wherein adjusting, according to the behavior state of the attachment contact, a magnetic force of the electromagnet corresponding to the attachment contact in the smart display terminal comprises:
selecting, according to the behavior state of the attachment contact, to perform decrease regulation or increase regulation on the magnetic force of the electromagnet corresponding to the attachment contact.

8. The method according to claim 1 or 7, wherein the behavior state of the attachment contact comprises: a combined behavior state; and adjusting, according to the behavior state of the attachment contact, the magnetic force of the electromagnet corresponding to the attachment contact in the smart display terminal comprises:
performing the increase regulation on the magnetic force of the electromagnet corresponding to the attachment contact in a case that the behavior state of the attachment contact is the combined behavior state.

9. The method according to claim 1 or 7, wherein the behavior state of the attachment contact comprises: a separated behavior state; adjusting, according to the behavior state of the attachment contact, the magnetic force of the electromagnet corresponding to the attachment contact in the smart display terminal comprises:
performing decrease regulation on the magnetic force of the electromagnet corresponding to the attachment contact in a case that the behavior state of the attachment contact is the separated behavior state.

10. The method according to any one of claims 1-9, wherein a surface of the smart display terminal comprises a plurality of electromagnet regions, and each electromagnet region is provided with a plurality of attachment contacts; and adjusting, according to the behavior state of the attachment contact, the magnetic force of the electromagnet corresponding to the attachment contact in the smart display terminal comprises:
adjusting, according to the behavior state of the attachment contact, a magnetic force corresponding to an electromagnet region where the attachment contact is located.

11. The method according to any one of claims 1-10, wherein the first sensor comprises at least one of the following sensors: a direction sensor, a gravity sensor, an acceleration sensor, a gyroscope, a pressure sensor, and a touch sensor.

12. An apparatus for adjusting an attachment force, comprising: an acquisition component, a determination component, and an adjustment component, wherein
the acquisition component is configured to acquire collection data of a first sensor in a smart display terminal;
the determination component is configured to determine, according to the collection data of the first sensor, a behavior state of an attachment contact on the smart display terminal by a behavior prediction model which is pre-trained; and
the adjustment component is configured to adjust, according to the behavior state of the attachment contact, a magnetic force of an electromagnet corresponding to the attachment contact in the smart display terminal, so as to adjust an attachment force of the attachment contact.

13. The apparatus according to claim 12,
wherein the apparatus further comprises: a detection component, configured to detect whether the smart display terminal is moved;
the acquisition component is further configured to acquire the collection data of the first sensor in a case that the smart display terminal is moved.

14. A smart display device, wherein the device comprises: a processor, a storage medium and a bus, the storage medium storing machine-readable instructions executable by the processor; wherein when an apparatus for adjusting an attachment force is in operation, the processor and the storage medium communicate with each other via the bus, and the processor executes the machine-readable instructions so as to execute the method according to any one of claims 1-11.

15. A storage medium, wherein the storage medium stores a computer program which, when being run by a processor, executes the method according to any one of claims 1-11.
